# EUROPÄISCHE PATENTANMELDUNG

(11) **EP 2 586 843 A1**
(43) Veröffentlichungstag der Anmeldung: **01.05.2013**
(21) Anmeldenummer: 11186718.0
(22) Anmeldetag: 26.10.2011
(51) Int. Cl.: C09K 5/10, C23F 11/18

(54) **Alkalimetallnitrat als Zusatz zu Kühlmitteln in Kühlmittelsystemen**

(71) Anmelder: Haertol Chemie GmbH, 39126 Magdeburg (DE)
(72) Erfinder: Brinck, Carmen, 39291 Möser (DE); Dühring, Egon, 39167 Irxleben (DE)
(74) Vertreter: von Kreisler Selting Werner

(57) **Zusammenfassung**

Die Erfindung betrifft die Verwendung von Alkalimetallnitrat als Zusatz zu Kühlmitteln in Kühlsystemen zu Verringerung und Vermeidung von Ausfällungen.

## Beschreibung

### Technisches Gebiet der Erfindung

Die Erfindung betrifft die Verwendung von Alkalimetallnitrat als Zusatz zu Kühlmitteln in Kühlsystemen zur Verringerung oder Vermeidung von Ausfällungen, insbesondere von silikatischen, auf den Korrosionsinhibitor zurückgehenden, Ausfällungen.

### Technischer Hintergrund der Erfindung

Der Einsatz von Kühlmitteln in verschiedenen Kühlsystemen mit geschlossenem Kühlkreislauf, wie z.B. in Wärmetauschern von Gas-, Benzin- und Dieselmotoren ist weit verbreitet und von großer Bedeutung.

Kühlsysteme können aus unterschiedlichen Metallen bestehen, wobei vielfach auf Aluminium und Aluminiumlegierungen zurückgegriffen wird, da diese gute mechanische Eigenschaften und thermische Beständigkeit auch bei höheren Temperaturen aufweisen und vergleichsweise leicht und günstig sind.

Bei der Herstellung von Kühlsystemen werden einzelne Bauelemente über Lötverfahren miteinander verbunden. Zum Löten von Aluminium und Aluminiumlegierungen werden Flussmittel eingesetzt, um die auf der Oberfläche vorhandenen Oxidschichten zu lösen. Dabei kommen bevorzugt fluorid- und/oder chloridhaltige Flussmittel zum Einsatz. US Patent 2,179,258 betrifft eine grundlegende Offenbarung derartiger Flussmittel. Ein Beispiel für ein geeignetes herkömmliches Flussmittel für Aluminium ist eine Zusammensetzung umfassend Kaliumfluorid, Kalium-Aluminiumfluorid, Zinkchlorid, Lithiumchlorid, Natriumchlorid und Kaliumchlorid. Nach dem Entfernen der Oxidschicht unter erhöhter Temperatur findet der eigentliche Lötprozess statt. Nach Abschluss des Lötens verbleiben jedoch noch Rückstände des Flussmittels in den Kühlsystemen. Eine ausreichende Spülung der fertigen Kühlsysteme zur Entfernung dieser Rückstände findet aus Kostengründen allerdings nur selten statt.

Das Belassen der Flussmittelrückstände im Kühlsystem führt dazu, dass diese mit den im Kühlmittel enthaltenen silikatischen Korrosionsinhibitior(en) zu unerwünschten Ausfällungen führen, die Silikate also für ihre Funktion als Korrosionsinhibitor im System nicht mehr zur Verfügung stehen.

Kühlmittel enthalten unter anderem thermisch stabilisierte Silikate, wie z.B. Ortho- oder Metasilikate (z.B. Natriummetasilikat), die auf der inneren Oberfläche des Kühlsystems eine Schutzschicht ausbilden, ohne die Metalloberfläche selbst anzugreifen. Durch eine Silikatschicht auf der Aluminiumoberfläche wird die Korrosion verhindert oder erschwert.

Aufgabe der vorliegenden Erfindung war es daher ein Kühlmittelkonzentrat und ein darauf basierendes Kühlmittel zur Verfügung zu stellen, welches die Nachteile der Ausfällung der silikatischen Korrosionsinhibitoren durch die im Kühlsystem nach dem Löten noch vorhandenen Rückstände des Flussmittels nicht oder nur noch im verringerten Maße aufweist.

### Beschreibung der Erfindung

Gemäß der Erfindung wurde überraschend gefunden, dass die Ausfällung der Silikate durch Zusatz von Alkalimetallnitrat zum Kühlmittel bzw. Kühlmittelkonzentrat reduziert oder verhindert werden kann.

Dementsprechend betrifft die Erfindung die Verwendung von Alkalimetallnitrat als Zusatz zu Kühlmitteln in Kühlsystemen zur Verringerung (Reduktion) oder Vermeidung von Ausfällungen. In einer bevorzugten konkreten Ausgestaltung betrifft die Erfindung die Verwendung von Alkalimetallnitrat als Zusatz zu Kühlmittelkonzentraten und Kühlmitteln, insbesondere silikatische Korrosionsinhibitoren enthaltende Kühlmittelkonzentrate und Kühlmittel, zur Verringerung oder Verhinderung von Ausfällungen, insbesondere silikatischen Ausfällungen, in Kühlsystemen, insbesondere aus Aluminium oder Aluminiumlegierungen.

Bei den in den Kühlmitteln und Kühlmittelkonzentraten enthaltenen Silikaten als Korrosionsinhibitoren (nachfolgend auch 'silikatische Korrosionsinhibitoren'), die zusammen mit den fluorid- und chloridhaltigen Flussmitteln Ausfällungen (nachfolgend auch 'silikatische Ausfällungen' oder 'Silikatausfällungen') bilden, handelt es sich um an sich wasserlösliche anorganische Silikate, wie beispielsweise Alkalimetall Orthosilikate und/oder Alkalimetall Metasilikate. Typische Beispiele sind Natrium und Kalium Orthosilikate sowie Natrium- und Kalium-Metasilikate.

Das Alkalimetallnitrat ist bevorzugt ausgewählt aus der Gruppe bestehend aus Natriumnitrat, Kaliumnitrat und Gemischen von Natriumnitrat und Kaliumnitrat. Das Alkalimetallnitrat sollte bevorzugt in einer Konzentration von 0,04 oder mehr bis 0,54 Gew.-% oder weniger, basierend auf dem gesamten Gewicht des Kühlmittels, vorliegen. Besonders bevorzugt ist ein Zusatz von Alkalimetallnitrat in einer Menge von 0,4 Gew.-% oder weniger.

Weiterhin können dem Konzentrat verschiedene Additive zugefügt werden, die, je nach Art, die Eigenschaften des daraus hergestellten Kühlmittels verbessern und das Kühlmittelsystem vor Korrosion schützen.

Neben dem Gefrierschutzmittel können im Kühlmittel bzw. Kühlmittelkonzentrat zusätzlich, eine oder mehrere aliphatische, cycloaliphatische oder aromatische Monocarbonsäure(n) mit jeweils 3 bis 16 C-Atomen in Form ihrer Alkalimetall-, Ammonium- oder substituierten Ammoniumsalze, eine oder mehrere aliphatische oder aromatische Di- oder Tricarbonsäure(n) mit jeweils 3 bis 21 C-Atomen in Form ihrer Alkalimetall-, Ammonium oder substituierter Ammoniumsalze, Buntmetallschutzagenzien, Borate (wie z.B. Natriumtetraborat (Borax)), Benzoate, Nitrite (wie z.B. Natriumnitrit), aliphatische, cycloaliphatische oder aromatische Amine mit 2 bis 15, vorzugsweise 4 bis 8 C-Atomen, Phosphate (wie z.B. Di-Natriumhydrogenphosphat, Tri-Natriumphosphat), Gluconate (als Silikatstabilisator) und Gemische davon enthalten sein.

In einer bevorzugten Ausgestaltung sind die erfindungsgemäßen Kühlmittel bzw. Kühlmittelkonzentrate frei von Nitriten, Phosphaten und Aminen.

Typische, erfindungsgemäß einsetzbare Gefrierschutzmittel sind Alkohole mit 1 bis 3 Hydroxylgruppen und deren wasserlöslichen Derivate. Dabei handelt es sich um einwertige Alkohole, Diole, Triole sowie die Mono-C₁-C₄-Alkylether der Diole und Triole. Beispiele sind 1- oder 2-Propanol, Mono-, Di-, Tri- oder Tetraethylenglykol, Mono-, Di-, Tri- oder Tetrapropylenglykol oder die wassermischbaren Mono-C₁-C₄-Alkylether der Diole, Triole oder Glycerin. Besonders bevorzugt ist das Gefrierschutzmittel ausgewählt aus der Gruppe bestehend aus Monoethylenglykol, Monopropylenglykol (1,2-Propandiol), Glycerin und deren Gemische.

Als lineare oder verzweigtkettige aliphatische oder cycloaliphatische Monocarbonsäuren kommen beispielsweise Propionsäure, Pentansäure, Hexansäure, Cyclohexylessigsäure, Octansäure, 2-Ethylhexansäure, Nonansäure, Isononansäure, Decansäure, Undecansäure oder Dodecansäure in Betracht. Als aromatische Monocarbonsäure eignet sich insbesondere Benzoesäure, daneben kommen auch beispielsweise C₁ bis C₈-Alkylbenzoesäuren, wie o-, m-, p-Methylbenzoesäure oder p-tert.-Butylbenzoesäure sowie Hydroxylgruppenhaltige aromatische Monocarbonsäuren wie o-, m-, oder p-Hydroxybenzoesäure, o-, m- oder p-(Hydroxymethyl)benzoesäure oder Halogenbenzoesäuren wie o-, m- oder p-Fluorbenzoesäure in Betracht.

Typische Beispiele für Di- oder Tricarbonsäuren sind Malonsäure, Bernsteinsäure, Glutarsäure, Adipinsäure, Pimelinsäure, Korksäure, Azelainsäure, Sebacinsäure, Undecandisäure, Dodecandisäure, Dicyclopentadiendicarbonsäure, Phthalsäure, Terephthalsäure und Triazin-triiminocarbonsäuren wie 6,6',6"-(1,3,5-Triazin-2,4,6- triyltriimino)-trihexansäure.

Alle genannten Carbonsäuren der Gruppen und liegen als Alkalimetallsalze, vor allem als Natrium- oder Kaliumsalze, oder als Ammoniumsalze oder substituierte Ammoniumsalze (Aminsalze) vor, z. B. mit Ammoniak, Trialkylaminen (wobei die Alkylgruppen unabhängig voneinander 1 bis 6, vorzugsweise 1 bis 3 Kohlenstoffatome enthalten können) oder Trialkanolaminen (wobei die Alkanolgruppen unabhängig voneinander 2 bis 6, vorzugsweise 2 oder 3 Kohlenstoffatome enthalten können). Die genannten Carbonsäuren können als Gemische vorliegen.

Bevorzugte Buntmetallschutzagenzien sind wasserlösliche Azole und deren Alkalimetallsalze, insbesondere deren Natrium-Salze, bevorzugt Triazole, insbesondere Tolyltriazol, Benzotriazol, hydriertes Tolutriazol, 1H-1,2,4-Triazol, Benzimidazol, Benzthiazol, Adenin, Purin, 6-Methoxypurin, Indol, Isoindol, Isoindolin, Pyridin, Pyrimidin, 3,4-Diaminopyridin, 2-Aminopyrimidin, 2-Mercaptopyrimidin und Mercaptobenzothiazol und deren Derivate. Typische Beispiele für Tolyltriazol- und Benzotriazolderivate sind außerdem in der EP 1 485 444 beschrieben. Bevorzugt sind jedoch Tolyltriazol, Benzotriazol und deren Natrium-Salze.

Weitere Additive, die im Kühlmittel bzw. Kühlmittelkonzentrat enthalten sein können, sind herkömmliche Farbstoffe, Vergällungsmittel, Bitterstoffe (z.B. Denatoniumbenzoat), Hartwasser-Stabilisatoren (z.B. auf Basis von Polyacrylsäure, Polymaleinsäure, Acrylsäure-Maleinsäure Copolymeren), AntiSchaummittel und Antioxidantien.

Der pH-Wert der erfindungsgemäßen Konzentrate liegt üblicherweise im Bereich von 7 bis 9,5, vorzugsweise 7 bis 9, insbesondere 7,5 bis 8,5. Der gewünschte pH-Wert kann gegebenenfalls auch durch Zugabe von Alkalimetallhydroxid, Ammoniak oder Aminen eingestellt werden. Festes Natrium- oder Kaliumhydroxid sowie wässrige Natronlauge oder Kalilauge sind hierfür geeignet.

Das Kühlmittel besteht vorzugsweise zu 40 Gew.-% oder mehr bis 80 Gew.-% oder weniger aus Wasser und zu 20 Gew.-% oder mehr bis 60 Gew.-% oder weniger aus einem Kühlmittelkonzentrat. Das Kühlmittelkonzentrat weist typischerweise einen Wassergehalt von 5 Gew.-% oder weniger auf.

Das Kühlmittelkonzentrat besteht vorzugsweise zu 90 Gew.-% oder mehr bis 96 Gew.-% oder weniger aus dem Gefrierschutzmittel, bevorzugt 92 Gew.-% oder mehr bis 95 Gew.-% oder weniger, besonders bevorzugt 93 Gew.-% oder mehr bis 94 Gew.-% oder weniger, jeweils bezogen auf das Gesamtgewicht des Konzentrats. Dies entspricht einer Menge von 18 Gew.-% oder mehr bis 57,6 Gew.-% oder weniger bezogen auf das Gesamtgewicht des Kühlmittels, bevorzugt 18,4 Gew.-% oder mehr bis 57,0 Gew.-% oder weniger, besonders bevorzugt 18,6 Gew.-% oder mehr bis 56,4 Gew.-% oder weniger.

Das Kühlmittelkonzentrat enthält vorzugsweise zu 0,5 Gew.-% oder mehr bis 9,9 Gew.- % oder weniger organischen Säure, bevorzugt 0,9 Gew.-% oder mehr bis 6 Gew.-% oder weniger, besonders bevorzugt 1 Gew.-% oder mehr bis 5 Gew.-% oder weniger, jeweils bezogen auf das Gesamtgewicht des Konzentrats. Dies entspricht einer Menge von 0,1 Gew.-% oder mehr bis 5,94 Gew.-% oder weniger, bezogen auf das Gesamtgewicht des Kühlmittels, bevorzugt 0,18 Gew.-% oder mehr bis 4,2 Gew.-% oder weniger, besonders bevorzugt 0,2 Gew.-% oder mehr bis 3,0 Gew.-% oder weniger.

Das Kühlmittelkonzentrat enthält vorzugsweise 0 Gew.-% oder mehr bis 0,4 Gew.-% oder weniger Azole, vorzugsweise Triazole, bevorzugt 0,005 Gew.-% oder mehr bis 0,2 Gew.-% oder weniger, besonders bevorzugt 0,01 Gew.-% oder mehr bis 0,1 Gew.-% oder weniger, jeweils bezogen auf das Gesamtgewicht des Konzentrats. Dies entspricht einer Menge von 0 Gew.-% oder mehr bis 0,06 Gew.-% oder weniger, bezogen auf das Gesamtgewicht des Kühlmittels, bevorzugt 0,001 Gew.-% oder mehr bis 0,048 Gew.-% oder weniger, besonders bevorzugt 0,002 Gew.-% oder mehr bis 0,03 Gew.-% oder weniger.

Das Kühlmittelkonzentrat enthält den/die silikatischen Korrosionsinhibitor(en) vorzugsweise in Gewichtsanteilen von 100 ppm oder mehr bis 1000 ppm oder weniger, bevorzugt 300 ppm oder mehr bis 800 ppm oder weniger, besonders bevorzugt 500 ppm oder mehr bis 600 ppm oder weniger.

Erfindungsgemäß enthält das Kühlmittelkonzentrat das Alkalimetallnitrat vorzugsweise in einer Menge von 0,2 Gew.-% oder mehr bis 0,9 Gew.-% oder weniger, mehr bevorzugt 0,3 Gew.-% oder mehr bis 0,7 Gew.-% oder weniger, besonders bevorzugt 0,4 Gew.-% oder mehr bis 0,5 Gew.-% oder weniger, jeweils bezogen auf das Gesamtgewicht des Konzentrats. Dies entspricht einer Menge von 0,04 Gew.-% oder mehr bis 0,54 Gew.-% oder weniger, bevorzugt 0,06 Gew.-% oder mehr bis 0,42 Gew.-% oder weniger, besonders bevorzugt 0,08 Gew.-% oder mehr bis 0,3 Gew.-% oder weniger, jeweils bezogen auf das Gesamtgewicht des Kühlmittels.

Die erfindungsgemäßen Zusammensetzungen können durch einfaches Mischen der einzelnen Komponenten hergestellt werden.

Kühlsysteme können Wärmetauscher mit einem geschlossenen Kühlkreislauf sein. Beispiele sind Wärmetauscher für Verbrennungsmotoren (z.B. von Personenfahrzeugen und Lastkraftwagen) und Blockheizkraftwerken.

Es wurde beobachtet, dass die Verwendung der erfindungsgemäßen auf den Kühlmittelkonzentraten basierenden Kühlmittel zu einer signifikanten Verringerung der silikatischen Ausfällungen, teilweise sogar zu einem vollständigen Ausbleiben der silikatischen Ausfällungen, führt.

Sofern nicht anders angegeben, beziehen sich alle Mengenangaben auf Gewichtsanteile bzw. Gewichtsprozente.

## Patentansprüche

1. Verwendung von Alkalimetallnitrat als Zusatz zu Kühlmitteln in Kühlsystemen zur Verringerung oder Vermeidung von Ausfällungen.

2. Verwendung gemäß Anspruch 1, **dadurch gekennzeichnet, dass** das Alkalimetallnitrat ausgewählt ist aus der Gruppe bestehend aus Natriumnitrat, Kaliumnitrat oder Gemischen davon.

3. Verwendung gemäß einem der vorangehenden Ansprüche, **dadurch gekennzeichnet, dass** das Kühlmittel das Alkalimetallnitrat in einer Konzentration von 0,04 bis 0,54 Gew.-% umfasst.

4. Verwendung gemäß einem der vorangehenden Ansprüche, **dadurch gekennzeichnet, dass** das Kühlmittel Silikat als Korrosionsinhibitor enthält.

5. Verwendung gemäß einem der vorangehenden Ansprüche, **dadurch gekennzeichnet, dass** das Kühlsystem aus Aluminium und/oder einer Aluminiumlegierung besteht.

6. Verwendung gemäß einem der vorangehenden Ansprüche, **dadurch gekennzeichnet, dass** es sich bei den Ausfällungen um Silikatausfällungen handelt.

7. Verwendung gemäß einem der vorangehenden Ansprüche, **dadurch gekennzeichnet, dass** das Kühlmittelkonzentrat weiterhin organische Carbonsäuren und Buntmetallschutzagenzien und enthält.
